# EUROPEAN PATENT SPECIFICATION

(11) **EP 2 052 601 B1**
(45) Date of publication and mention of the grant of the patent: **09.11.2011**
(21) Application number: 08253195.5
(22) Date of filing: 30.09.2008
(51) Int. Cl.: A01K 97/10

(54) **Angling rod support apparatus**
Angelruten-Trägervorrichtung
Appareil de support de canne à pêche

(30) Priority: 26.10.2007 GB 0721035
(43) Date of publication of application: 29.04.2009
(73) Proprietor: Fox International Group Limited, Hainault, Essex IG6 3UT (GB)
(72) Inventor: Taylor, Adam Richard Elliss, Loughton, Essex IG10 2QH (GB)
(74) Representative: Crouch, David John

(56) References cited:
- EP-A2- 1 552 742
- DE-U1- 9 015 479
- GB-A- 2 313 029
- JP-A- 2001 231 423

## Description

The present invention relates to apparatus for use in supporting one or more angling rods in readiness for a strike.

Such apparatus has been proposed hitherto in which a bar or frame of the apparatus is provided with a plurality of legs, typically four, which extend downwardly and outwardly from the horizontal bar or frame.

Such apparatus is disclosed in JP 2001 231423 and in DE 90 15 479 U1.

One problem encountered by such a construction is the difficulty in making the apparatus collapsible, so that the legs can be brought into alignment with the horizontal bar or frame, but at the same time sturdy and stable when in the unfolded condition for use in which the legs extend downwardly and outwardly from the bar or frame.

The present invention seeks to provide a remedy.

According to claim 1, the present invention is directed to angling rod support apparatus comprising a bar or frame from which at least one leg extends when the apparatus is in use, in which the said at least one leg comprises a first elongate part having an inner end pivoted by a pivot to the bar or frame and a second elongate part extending along the first part and longitudinally movable in relation thereto between a. locking position and a freeing position which is further away from the said inner end than the said locking position, the apparatus further comprising an engagement component attached to the bar or frame and having at least two engagement portions defining respective positions in which the leg can be locked, one of which being a stow-away position and in the other of which the leg extends downwardly from the bar or frame, when the said second part is in its locking position and an inner end thereof is in engagement with an associated one of the engagement portions, the said second part being movable from its locking position to its freeing position, so that the inner end of the said second part is moved out of engagement with one of the engagement portions, whereafter the leg may be pivoted about the pivot and the inner end of the said second part then moved into engagement with the other or another of the engagement portions by movement of the second part from its freeing position to its locking position, **characterised in that** the said engagement component is a collar component and the said at least two engagement portions are respective collar portions in either one of which the inner end of the said second part is received when it is engaged therewith, the collar portions being provided with an interconnecting slot.

Preferably, the said second part is generally tubular and is coaxial with and surrounds the first part. That enables a balanced construction to be made and also one which is less likely to suffer from ingress of dirt.

Preferably, a spring loading is provided between the said first and second parts to urge the second part towards its locking position. This assists in changing the position of the leg relative to the bar or frame.

Advantageously, the leg is provided with a third elongate part, one end of which can be attached to an outer end of the said first part in a tightened position, the third part being movable relative to the said first part from its tightened position to a loosened position, such that the said second part is inhibited from being moved from its locking position to its freeing position when the said third part is in its tightened position, but such that the said third part enables the said second part to be moved from its locking position to its freeing position when the said third part is in its loosened position. This effects an especially secure and locked-tight apparatus when in use.

Advantageously, the said outer end of the said first part protrudes outwardly and beyond an outer end of the said second part when the said second part is in its locking position. This facilitates the change of the said third part between its tightened position and its loosened position.

The said first part and the said second part may be connected together by means of interengaging screw threads which facilitate the change in the position of the third part between its tightened position and its loosened position.

Advantageously, the said at least one leg comprises a further elongate part which is telescopically in engagement with the said second and/or the said third elongate part. This enables the effective length of the leg to be adjusted. A selected position between the further part and the said second and/or said third part may be secured by means of a cam lock of the apparatus.

Advantageously, the said further part of the leg is hollow and is of a greater diameter than the said second part and/or the said third part. In that case, the cam lock would be provided at an intended inner end of the said further part.

Advantageously, for stability the apparatus is provided with at least two legs as defined by one or more of the preceding paragraphs, each of which is provided with a further pivot having a pivot axis generally transverse of the first mentioned pivot, to further facilitate folding and unfolding of the apparatus.

The said at least two legs may be provided with intermeshing gear teeth extending around their respective second pivots. This ensures a symmetry in the positioning of the legs with respect to the bar or frame.

In a preferred construction, the apparatus is provided with a frame having two elongate bars which are horizontal when the apparatus is in use secured together by spacers.

Examples of apparatus embodying the present invention will now be described with reference to the accompanying drawings, in which:
- Figure 1: shows a perspective view of the apparatus from above and to one side;
- Figure 2: shows parts of the apparatus shown in Figure 1 on a larger scale;
- Figure 3: shows parts of one of the legs of the apparatus shown in Figures 1 and 2 from one side;
- Figure 4: shows a cross-sectional view through the leg part shown in Figure 3 in the plane indicated by the line IV-IV of Figure 3;
- Figures 5 to 11: show respective successive positions of the parts of the legs shown in Figures 3 and 4 as the leg is changed from one position to the other;
- Figure 12: shows an exploded view of a modified construction of leg parts for the apparatus;
- Figure 13: shows those parts in an assembled condition;
- Figure 14: shows an axial sectional view of the leg parts shown in Figure 13, taken in a plane defined by the line XIV-XIV of Figure 13;
- Figure 15: shows a see-through view of the parts shown in Figure 13;
- Figure 16: shows a cross-sectional view of the leg parts shown in Figure 15 in the plane defined by the line XVI-XVI of Figure 15;
- Figure 17: shows a perspective view from above and to one side of a further embodiment of the present invention in a condition ready for use;
- Figure 18: shows a perspective view from above and to one side of the apparatus shown in Figure 17 in a stow-away condition;
- Figure 19: shows a perspective view from below and to one side of an end part of the apparatus shown in Figure 17;
- Figure 20: shows the part shown in Figure 19 in a stow-away condition;
- Figure 21: shows parts of Figure 19 from a different angle;
- Figure 22: shows an axial section of the part shown in Figure 21 in the plane defined by the line XXII-XXII of Figure 21; and
- Figure 23: shows, in the same sectional plane as Figure 22, parts thereof on a larger scale.

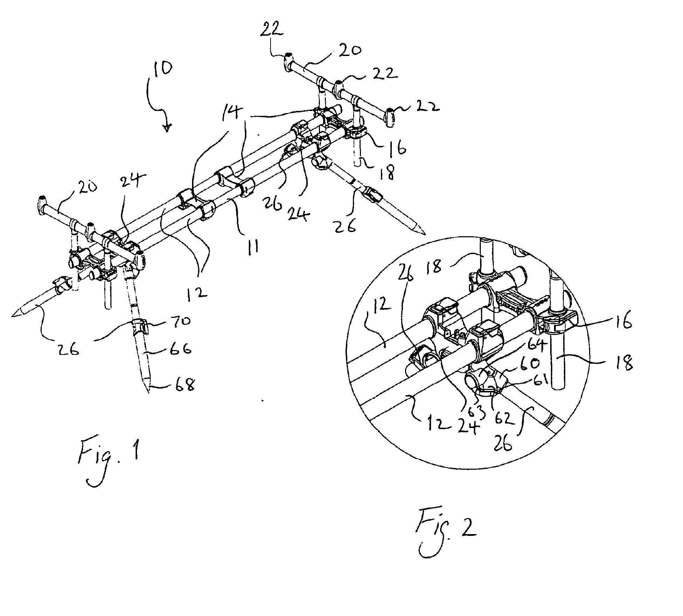

The apparatus shown in Figure 1 comprises a rod pod 10 for use in supporting one or more angling rods in readiness for a strike. The rod pod 10 may be made of a suitable metal, metal alloy or synthetic plastics material. It comprises a frame 11 having two generally horizontal bars 12 held together level with one another by means of spacers 14. Spacers 14 at the ends of the bars 12 are provided with mounts 16 for uprights 18 which in turn hold a buzz bar 20. Each buzz bar 20 is provided with three butt rests 22, one at each end and one in the middle.

A leg mount 24 extends between the bars 12, one adjacent to one end of the frame, and another adjacent to the other end. From each leg mount 24 there extend two legs 26. Each leg 26 extends downwardly and is splayed in a direction away from the centre of the frame.

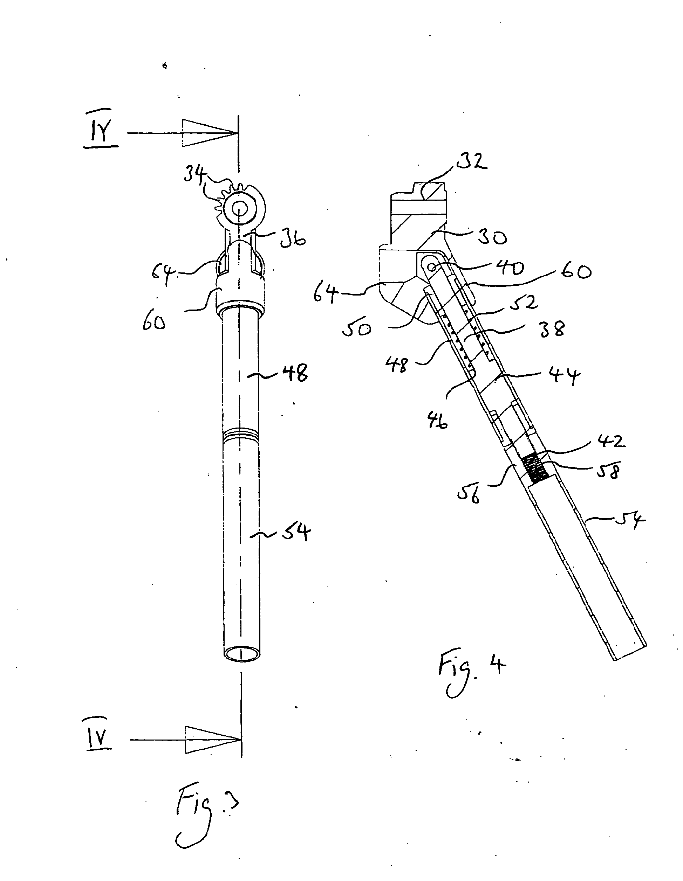

The construction of parts of each of the legs 26 is shown in greater detail in Figures 3 and 4. Thus each leg has a mounting block 30 through which extends a pivot bore 32 around part of which extend a series of teeth 34. These teeth intermesh with those of the other of the legs in the mount 24.

Each leg also has a first elongate part 38 pivotally connected to the mounting block 30 by way of a pivot 40 at an inner end of the elongate part 38. The axis of the pivot 40 is generally transverse to that of the pivot bore 32. The other end of the elongate part 38 is provided with an external screw thread 42. The central portion 44 of the part 38 is of wider cross-sectional diameter so that it provides a shoulder 46 at its inner end. Each leg also has a second elongate part 48. This part is tubular and is coaxial with and surrounds the first elongate part 38. It has a bushing 50 at its inner end through which extends the first elongate part 38 in sliding engagement therewith. A compression spring 52 extends between the shoulder 46 and the bushing 50.

A third elongate part 54 has an intended inner end 56 provided with an internal screw thread 58 which engages the external screw thread 42 of the first elongate part 38. The third elongate part 54 has the same external cross sectional diameter as the second elongate part 48.

The mounting block 30 is provided with three collar portions (only two of which are shown in Figures 3 and 4, but all three are evident in Figures 1 and 2). These are labeled 60, 62 and 64, respectively with interconnecting slots 61 and 63. A further elongate part 66 of each leg has a pointed ground engagement outer end 68, is hollow and is telescoped on to the third elongate part 54 and/or the second elongate part 48, the further part 66 being tubular and of a larger diameter than the second and third elongate parts so that the latter can be received into the hollow interior of the part 66. The upper end of the part 66 is provided with a cam lock 70 which can be selectively locked on to any position along the second and third elongate parts so that the effective length of each leg is independently adjustable.

When the rod pod is to be folded up for stowing away, the third elongate part 54 can be rotated in an anti-clockwise sense from the tightened position it has in Figure 4, in which the inner end of the second part 48 is locked in the collar portion 60, to a loosened position in which the second part 48 can be pulled against the resilience of the compression spring 52 so that the inner end and bushing 50 are removed from the collar portion 60. The first part 38 and with it the rest of the leg 26 could now be rotated about the pivot 40 until the first elongate part 38 is in alignment with the collar portion 64. The first elongate part 38 may now be allowed to travel towards the pivot 40 so that the inner end of the part 38 and with it the bushing 50 are now received in the collar portion 64. The leg may be locked in this position by the tightening of the third elongate part 54 onto the first elongate part 58 by a clockwise rotation of the part 54 with the screw threads 42 and 58 interengaging. The reverse procedure may be adopted to unfold the pod ready for use.

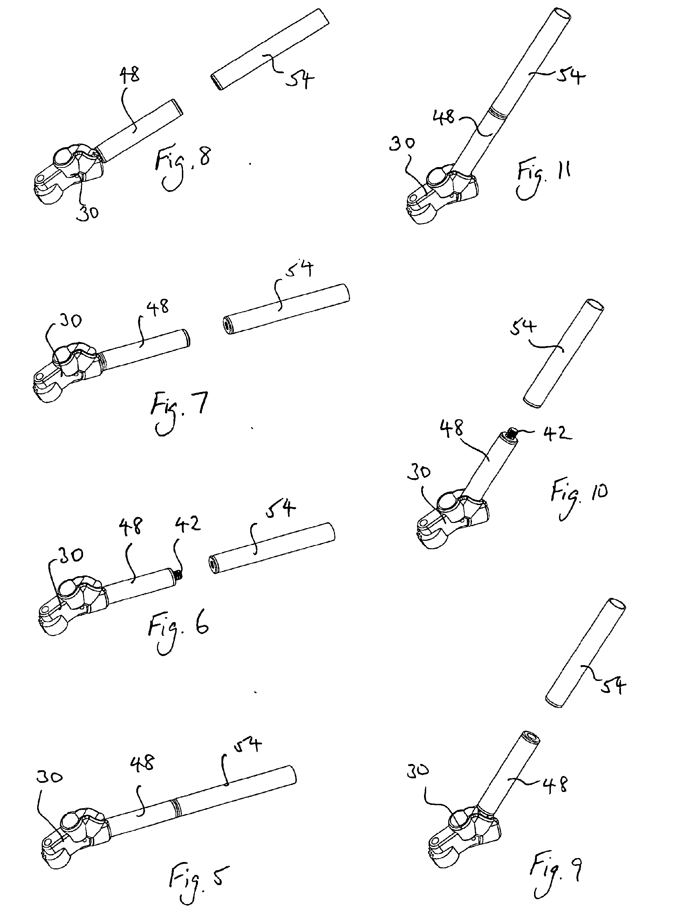

Figures 5 to 11 show successive steps in moving the leg from a fully extended position to an intermediate position.

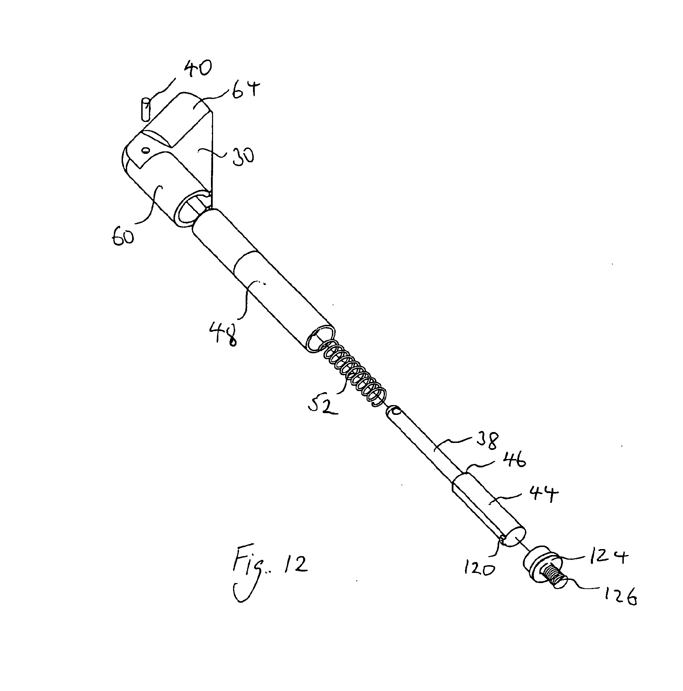

In the construction of leg and mount shown in Figure 12, corresponding parts are given the same reference numerals as in Figures 3 and 4. In this construction, the screw threaded end of the first elongate part 38 is omitted, and the outer end of the part 38 is provided with a protuberance 120 engaging a recess 122 in the interior of the part 48 to act in the manner of a bayonet connection. The outer end of the part 48 is provided with a cap 124 itself having a screw threaded spigot 126 projected in an outward direction.

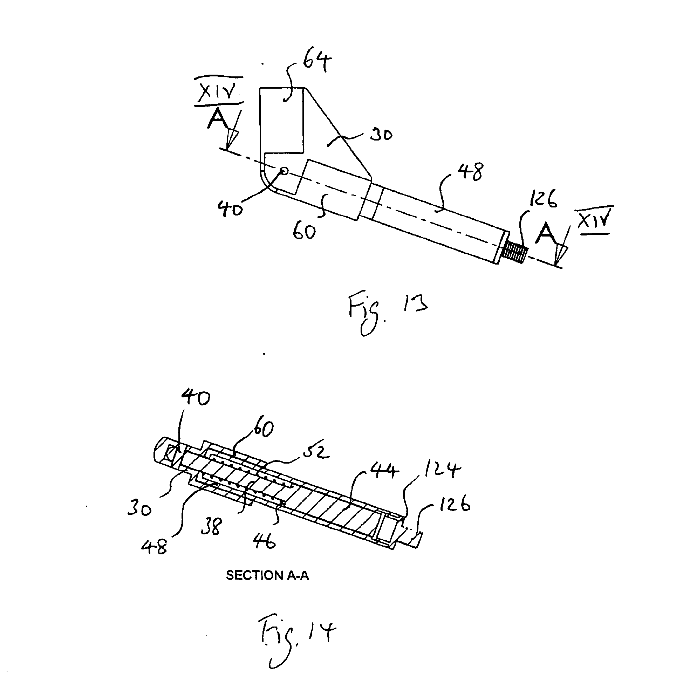

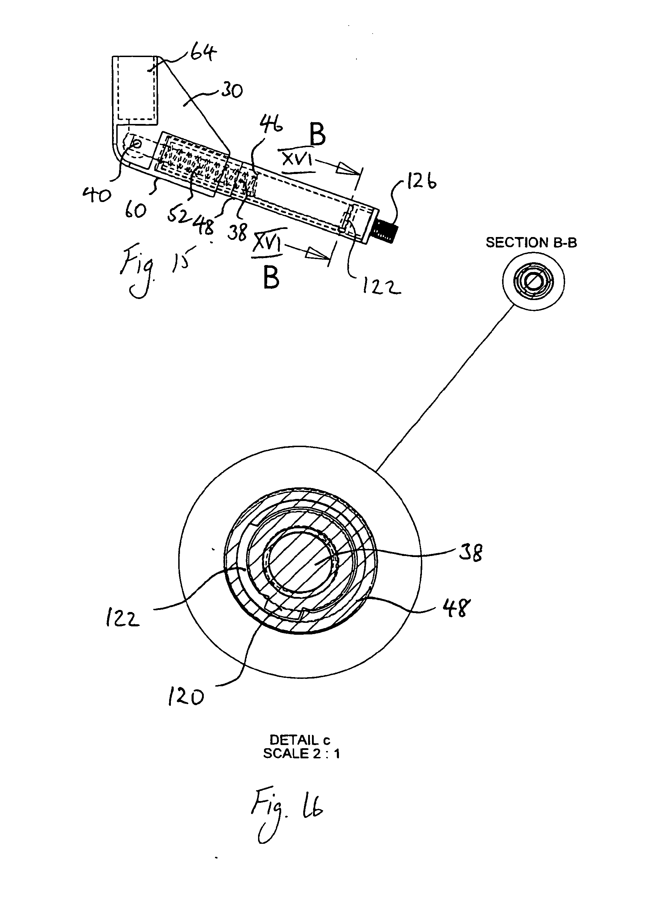

In this construction, the tubular part 48 can be rotated to release the bayonet connection, pulled outwardly against the resilience of the spring 52, pivoted around to the other collar portion 64, and then released a little with the action of the spring 52 to insert the inner end of the part 48 into the collar portion 64, whereafter the part 48 is rotated to reengage the bayonet connection and lock the leg part 48 in that new position. The reverse procedure can be used to put the leg back into the position as shown in Figures 12 to 16.

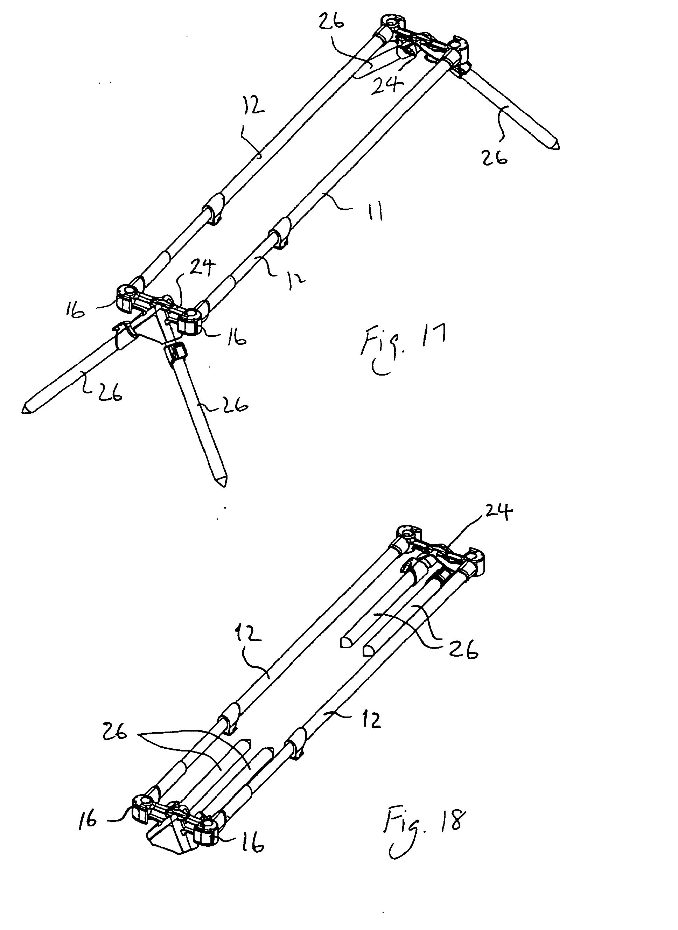

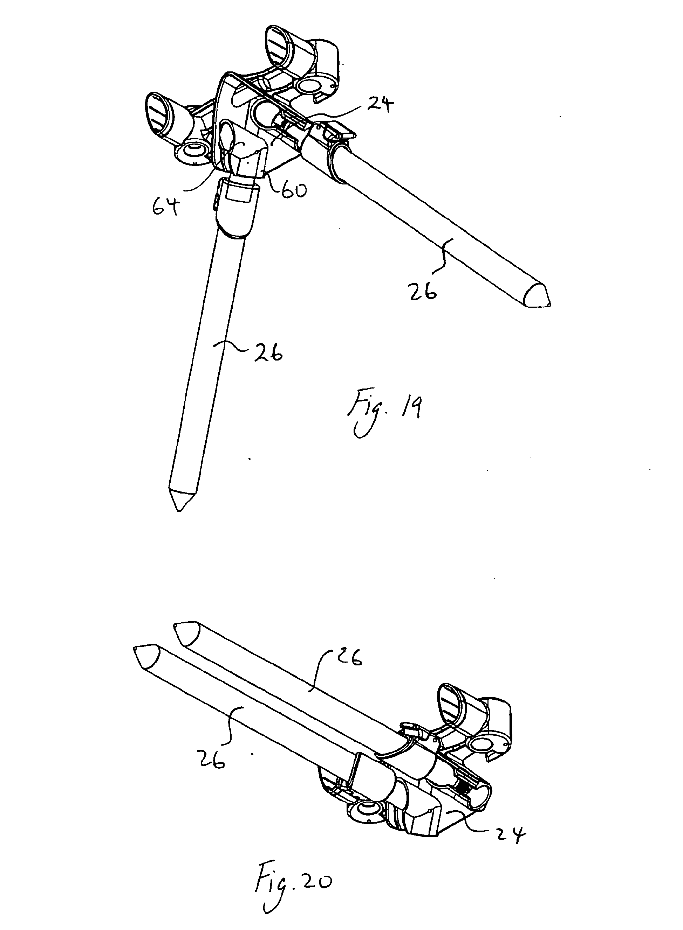

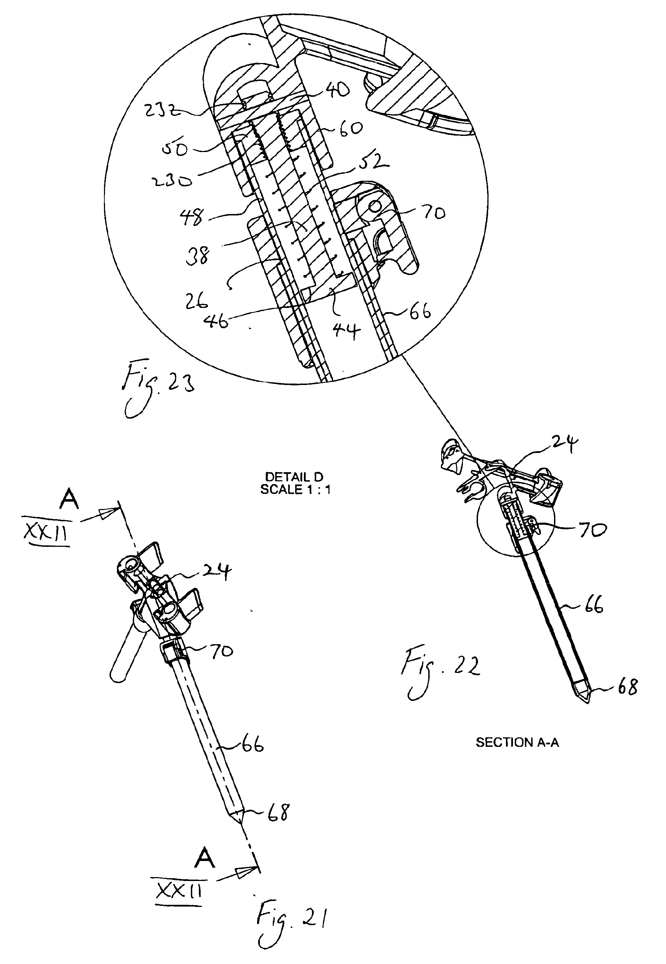

In the rod pod shown in Figures 17 to 23, corresponding parts have the same reference numerals as in the rod pod shown in Figures 1 to 4. In this construction, the leg mounts 24 and the end spacers 14 are merged as one component 24, so that this itself also is provided with the mounts 16 for uprights (not shown in these Figures). In this construction, the horizontal bars are telescopically adjustable in effective length, and in each leg the first elongate part 38 is a lot shorter and only has a short length of wider cross-section 44 to provide the shoulder 46. The bushing 50 of the inner end of the second elongate part 48 has an internal screw threading 230 which engages an external screw threading 232 around the inner end of the elongate part 38 where it is engaged by a pivot pin of the pivot 40.

In this embodiment, the leg 26 can be moved from its extended position to its stow-away position by rotating it in an anti-clockwise sense to disengage the bushing 50 from the inner end of the first elongate part 38, pulling the leg outwardly against the resilience of the pin 32, rotating it about the pivot 40 until the bushing 50 and inner end of the elongate part 48 are in alignment with the other collar portions 64, releasing the tension in the spring 52 by allowing the inner end of the elongate part 48 and with it the bushing 50 to be received within the collar portion 64, whereafter the screw threadings 230 and 232 are re-engaged and then tightened with the leg in its stow away position. The reverse action enables the leg to be put back into its extended position.

Numerous modifications and variations may occur to the reader without taking the resulting construction outside the scope of the present invention as defined in the appended claims. To give one example only, the spring 52 may be omitted.

## Claims

1. Angling rod support apparatus (10) comprising a bar or frame (11) from which at least one leg (26) extends when the apparatus is in use, in which the said at least one leg (26) comprises a first elongate part (38) having an inner end pivoted by a pivot (40) to the bar or frame (11) and a second elongate part (48) extending along the first part (38) and longitudinally movable in relation thereto between a locking position and a freeing position which is further away from the said inner end than the said locking position, the apparatus further comprising an engagement component (60, 62, 64) attached to the bar or frame (11) and having at least two engagement portions (60, 64) defining respective positions in which the leg can be locked, one of which being a stow-away position and in the other of which the leg extends downwardly from the bar or frame (11), when the said second part is in its locking position and an inner end thereof is in engagement with an associated one (60) of the engagement portions, the said second part (48) being movable from its locking position to its freeing position, so that the inner end of the said second part (48) is moved out of engagement with one of the engagement portions (60), whereafter the leg (26) may be pivoted about the pivot (40) and the inner end of the said second part (48) then moved into engagement with the other or another of the engagement portions (64) by movement of the second part (48) from its freeing position to its locking position, **characterised in that** the said engagement component (60, 62, 64) is a collar component and the said at least two engagement portions (60, 64) are respective collar portions in either one of which the inner end of the said second part (48) is received when it is engaged therewith, the collar portions (60, 64) being provided with an interconnecting slot (61, 63).

2. Angling rod support apparatus according to claim 1, **characterised in that** the said second part (48) is generally tubular and is coaxial with and surrounds the first part (38).

3. Angling rod support apparatus according to claim 1 or claim 2, **characterised in that** a spring loading (52) is provided between the said first and second parts (38, 48), to urge the second part (48) towards its locking position.

4. Angling rod support apparatus according to any preceding claim, **characterised in that** the leg (26) is provided with a third elongate part (54) one end of which can be attached to an outer end of the said first part (38) in a tightened position, the third part (54) being movable relative to the said first part (38) from its tightened position to a loosened position, such that the said second part (48) is inhibited from being moved from its locking position to its freeing position when the said third part (54) is in its tightened position, but such that the said third part (54) enables the said second part (48) to be moved from its locking position to its freeing position when the said third part (54) is in its loosened position.

5. Angling rod support apparatus according to any preceding claim, **characterised in that** the said outer end of the said first part (38) protrudes outwardly and beyond an outer end of the said second part (48) when the said second part is in its locking position.

6. Angling rod support apparatus according to claim 4 or claim 5 read as appended to claim 4, **characterised in that** the said first part (38) and the said second part (48) are connected together by means of interengaging screw threads which facilitate the change in the position of the third part (54) between its tightened position and its loosened position.

7. Angling rod support apparatus according to any preceding claim, **characterised in that** the said at least one leg (26) comprises a further elongate part (66) which is telescopically in engagement with the said second (48) and/or the said third elongate part (54).

8. Angling rod support apparatus according to claim 7, **characterised in that** a selected position between the further part (66) and the said second (48) and/or said third part (54) is securable by means of a cam lock (70) of the apparatus.

9. Angling rod support apparatus according to claim 7 or claim 8, **characterised in that** the said further part (66) of the leg (26) is hollow and is of a greater diameter than the said second part (48) and/or the said third part (54).

10. Angling rod support apparatus according to claim 9 read as appended to claim 8, **characterised in that** the cam lock (70) is provided at an intended inner end of the said further part (66).

11. Angling rod support apparatus according to any receding claim; **characterised in that** the apparatus is provided with at least two such legs (26) each of which is provided with a further pivot (32) having a pivot axis generally transverse of the first mentioned pivot (40), to further facilitate folding and unfolding of the apparatus (10).

12. Angling rod support apparatus according to claim 11, **characterised in that** the said at least two legs (26) are provided with intermeshing gear teeth extending around their respective second pivots (32).

13. Angling rod support apparatus according to any preceding claim **characterised in that** the apparatus is provided with a frame having two elongate bars which are horizontal when the apparatus is in use secured together by spacers.

## Patentansprüche

1. Angelruten-Tragvorrichtung (10), mit einem Stab oder Rahmen (11), von dem sich wenigstens ein Schenkel (26) erstreckt, wenn die Vorrichtung in Gebrauch ist, wobei der wenigstens eine Schenkel (26) einen ersten lang gestreckten Teil (38) mit einem durch ein Gelenk (14) mit dem Stab oder Rahmen (11) schwenkbar verbundenen inneren Ende und einem zweiten lang gestreckten Teil (48), der sich längs des ersten Teils (38) erstreckt und relativ hierzu zwischen einer Verriegelungsposition und einer Freigabeposition, die von dem inneren Ende weiter entfernt ist als die Verriegelungsposition, longitudinal beweglich ist, wobei die Vorrichtung ferner eine Eingriffkomponente (60, 62, 64) aufweist, die an dem Stab oder Rahmen (11) befestigt ist und wenigstens zwei Eingriffabschnitte (60, 64) besitzt, die jeweilige Positionen definierten in denen der Schenkel verriegelt werden kann, wovon eine eine Vcrstauposition ist und in der Anderen der Schenkel sich von dem Stab oder Rahmen (11) nach unten erstreckt, wenn der zweite Teil in seiner Verriegelungsposition ist und ein inneres Ende hiervon mit einem Zugeordneten (60) der Eingriffabschnitte in Eingriff ist, wobei der zweite Teil (48) aus seiner Verriegelungsposition in seine Freigabeposition beweglich ist, so dass das innere Ende des zweiten Teils (48) aus dem Eingriff mit einem der Eingriffabschnitte (60) bewegt wird, woraufhin der Schenkel (26) um das Gelenk (40) geschwenkt werden kann und das innere Ende des zweiten Teils (48) dann in einen Eingriff mit dem Anderen oder einem Weiteren der Eingriffabschnitte (64) bewegt wird, indem der zweite Teil (48) aus seiner Freigabcposition in seine Verriegelungsposition bewegt wird, **dadurch gekennzeichnet, dass** die Eingriftkomponentc (60, 62, 64) eine Kranzkomponente ist und die wenigstens zwei Eingriffabschnitte (60, 64) jeweilige Kranzabschnitte sind, wobei in einem von ihnen das innere Ende des zweiten Teils (48) aufgenommen ist, wenn es damit in Eingriff ist, wobei die Kranzabschnitte (60, 64) mit einem Verbindungsschlitz (61, 63) versehen sind.

2. Angelruten-Tragvorrichtung nach Anspruch 1, **dadurch gekennzeichnet, dass** der zweite Teil (48) im Allgemeinen rohrförmig ist und zu dem ersten Teil (38) koaxial ist und diesen umgibt.

3. Angelruten-Tragvorrichtung nach Anspruch 1 oder Anspruch 2, **dadurch gekennzeichnet, dass** zwischen dem ersten und dem zweiten Teil (38, 48) eine Federbelastung (52) vorgesehen ist, um den zweiten Teil (48) in seine Verriegelungsposition zu drängen.

4. Angelruten-Tragvorrichtung nach einem vorhergehenden Anspruch, **dadurch gekennzeichnet, dass** der Schenkel (26) mit einem dritten lang gestreckten Teil (54) versehen ist, wovon ein Ende an einem äußeren Ende des ersten Teils (38) in einer befestigten Position befestigt sein kann, wobei der dritte Teil (54) relativ zu dem ersten Teil (38) aus seiner befestigten Position in eine gelöste Position beweglich ist, so dass der zweite Teil (48) an einer Bewegung aus seiner Verriegelungsposition in seine Freigabeposition gehindert wird, wenn der dritte Teil (54) in seiner befestigten Position ist, jedoch derart, dass der dritte Teil (54) dem zweiten Teil (48) ermöglicht, aus seiner Verriegelungsposition in seine Freigabeposition bewegt zu werden, wenn sich der dritte Teil (54) in seiner gelösten Position befindet.

5. Angelruten-Tragvorrichtung nach einem vorhergehenden Anspruch, **dadurch gekennzeichnet, dass** das äußere Ende des ersten Teils (38) nach außen und über ein äußeres Ende des zweiten Teils (48) vorsteht, wenn der zweite Teil in seiner Verriegelungsposition ist.

6. Angelruten-Tragvorrichtung nach Anspruch 4 oder Anspruch 5, wenn abhängig von Anspruch 4, **dadurch gekennzeichnet, dass** der erste Teil (38) und der zweite Teil (48) mittels in Eingriff befindlicher Schraubgewinde, die die Änderung der Position des dritten Teils (54) zwischen seiner befestigten Position und seiner gelösten Position erleichtern, miteinander verbunden sind.

7. Angelruten-Tragvorrichtung nach einem vorhergehenden Anspruch, **dadurch gekennzeichnet, dass** der wenigstens eine Schenkel (26) einen weiteren lang gestreckten Teil (66) aufweist, der mit dem zweiten (48) und/oder dem dritten lang gestreckten Teil (54) teleskopartig in Eingriff ist.

8. Angelruten-Tragvorrichtung nach Anspruch 7, **dadurch gekennzeichnet, dass** eine ausgewählte Position zwischen dem weiteren Teil (66) und dem zweiten (48) und/oder dem dritten Teil (54) mittels einer Nockenverriegelung (70) der Vorrichtung befestigbar ist.

9. Angelruten-Tragvorrichtung nach Anspruch 7 oder Anspruch 8, **dadurch gekennzeichnet, dass** der weitere Teil (66) des Schenkels (26) hohl ist und einen größeren Durchmesser als der zweite Teil (48) und/oder der dritte Teil (54) besitzt.

10. Angclruten-Tragvorrichtung nach Anspruch 9, wenn abhängig von Anspruch 8, **dadurch gekennzeichnet, dass** die Nockenverriegelung (70) an einem bestimmungsgemäßen inneren Ende des weiteren Teils (66) vorgesehen ist.

11. Angelruten-Tragvorrichtung nach einem vorhergehenden Anspruch, **dadurch gekennzeichnet, dass** die Vorrichtung mit wenigstens zwei solchen Schenkeln (26) versehen ist, wovon jeder mit einem weiteren Gelenk (32) verschen ist, das eine Schwenkachse im Allgemeinen quer zu dem erstgenannten Gelenk (409 besitzt, um das Ausklappen und Einklappen der Vorrichtung (10) weiter zu erleichtern.

12. Angelruten-Tragvorrichtung nach Anspruch 11, **dadurch gekennzeichnet, dass** die wenigstens zwei Schenkel (26) mit kämmenden Zahnradzähnen versehen sind, die sich um ihre jeweiligen zweiten Gelenke (32) erstrecken.

13. Angelruten-Tragvorrichtung nach einem vorhergehenden Anspruch, **dadurch gekennzeichnet, dass** die Vorrichtung mit einem Rahmen versehen ist, der zwei lang gestreckte Stäbe besitzt, die horizontal sind, wenn die Vorrichtung in Gebrauch ist, und durch Abstandshalter aneinander befestigt sind.

## Revendications

1. Appareil de support de canne à pêche (10) comprenant une barre ou un châssis (11) d'où s'étend au moins un pied (26) lorsque l'appareil est en service, dans lequel ledit au moins un pied (26) comprend une première partie allongée (38) ayant une extrémité intérieure montée pivotable sur un pivot (40) jusqu'à la barre ou au châssis (11) et une deuxième partie allongée (48) s'étendant le long de la première partie (38) et longitudinalement mobile par rapport à celle-ci entre une position de blocage et une position de déblocage qui est plus éloignée de ladite extrémité intérieure que ladite position de blocage, l'appareil comprenant en outre un composant de mise en prise (60, 62, 64) fixé à la barre ou au châssis (11) et ayant au moins deux portions de mise en prise (60, 64) définissant des positions respectives dans lesquelles le pied peut être bloqué, l'une d'elles étant une position de rangement et l'autre étant une position dans laquelle le pied s'étend vers le bas depuis la barre ou le châssis (11), lorsque ladite deuxième partie se trouve dans sa position de blocage et son extrémité intérieure se trouve en prise avec une portion associée (60) des portions de mise en prise, ladite deuxième partie (48) étant mobile pour passer de sa position de blocage à sa position de déblocage, de manière que l'extrémité intérieure de ladite deuxième partie (48) ne vienne plus en prise avec l'une des portions de mise en prise (60), après quoi le pied (26) peut être tourné autour du pivot (40) et l'extrémité intérieure de ladite deuxième partie (48) mise alors en prise avec l'autre ou une autre portion de mise en prise (64) par déplacement de la deuxième partie (48) de sa position de déblocage dans sa position de blocage, **caractérisé en ce que** ledit composant de mise en prise (60, 62, 64) est un composant de type bague et lesdites au moins deux portions de mise en prise (60, 64) sont des portions de bague respectives dans l'une ou l'autre desquelles est reçue l'extrémité intérieure de ladite deuxième partie (48) lorsqu'elle est en prise avec celles-ci, les parties de bague (60, 64) étant dotées d'une fente de raccordement mutuel (61, 63).

2. Appareil de support de canne à pêche selon la revendication 1, **caractérisé en ce que** ladite deuxième partie (48) est généralement tubulaire et coaxiale avec la première partie (38) tout en entourant celle-ci.

3. Appareil de support de canne à pêche selon la revendication 1 ou la revendication 2, **caractérisé en ce qu'**un ressort (52) est prévu entre lesdites première et deuxième parties (38, 48) afin de pousser la deuxième partie (48) dans sa position de blocage.

4. Appareil de support de canne à pêche selon l'une quelconque des revendications précédentes, **caractérisé en ce que** le pied (26) est doté d'une troisième partie allongée (54) dont une extrémité peut être fixée sur l'extrémité extérieure de ladite première partie (38) dans une position serrée, la troisième partie (54) étant mobile par rapport à ladite première partie (38) pour passer de sa position serrée à une position desserrée, de telle sorte que ladite deuxième partie (48) ne puisse pas passer de sa position de blocage à sa position de déblocage lorsque ladite troisième partie (54) est dans sa position serrée, mais de telle sorte que ladite troisième partie (54) permette à ladite deuxième partie (48) de passer de sa position de blocage à sa position de déblocage lorsque ladite troisième partie (54) est dans sa position desserrée.

5. Appareil de support de canne à pêche selon l'une quelconque des revendications précédentes, **caractérisé en ce que** ladite extrémité extérieure de ladite première partie (38) fait saillie vers l'extérieur et au-delà de l'extrémité extérieure de ladite deuxième partie (48) lorsque ladite deuxième partie se trouve dans sa position de blocage.

6. Appareil de support de canne à pêche selon la revendication 4 ou la revendication 5 lue comme dépendante de la revendication 4, **caractérisé en ce que** ladite première partie (38) et ladite deuxième partie (48) sont raccordées l'une à l'autre au moyen de filets de vis mutuellement en prise qui facilitent le changement de position de la troisième partie (54) entre sa position serrée et sa position desserrée.

7. Appareil de support de canne à pêche selon l'une quelconque des revendications précédentes, **caractérisé en ce que** ledit au moins un pied (26) comprend une autre partie allongée (66) qui vient en prise de manière télescopique avec ladite deuxième partie allongée (48) et/ou ladite troisième partie allongée (54).

8. Appareil de support de canne à pêche selon la revendication 7, **caractérisé en ce qu'**une position sélectionnée entre l'autre partie allongée (66) et ladite deuxième partie (48) et/ou ladite troisième partie (54) peut être fixée au moyen d'un système de blocage à came (70) de l'appareil.

9. Appareil de support de canne à pêche selon la revendication 7 ou la revendication 8, **caractérisé en ce que** ladite autre partie allongée (66) du pied (26) est creuse et de plus grand diamètre que ladite deuxième partie (48) et/ou que ladite troisième partie (54).

10. Appareil de support de canne à pêche selon la revendication 9 lue comme dépendante de la revendication 8, **caractérisé en ce que** le système de blocage à came (70) est prévu à une extrémité intérieure voulue de ladite autre partie allongée (66).

11. Appareil de support de canne à pêche selon l'une quelconque des revendications précédentes, **caractérisé en ce que** l'appareil est doté d'au moins deux pieds (26) de ce type dont chacun est muni d'un autre pivot (32) ayant un axe de pivotement généralement transversal par rapport au premier pivot (40) mentionné, dans le but de faciliter davantage le pliage et le dépliage de l'appareil (10).

12. Appareil de support de canne à pêche selon la revendication 11, **caractérisé en ce que** lesdits au moins deux pieds (26) sont dotés de dentures à engrènement mutuel qui s'étendent tout autour de leurs seconds pivots (32) respectifs.

13. Appareil de support de canne à pêche selon l'une quelconque des revendications précédentes, **caractérisé en ce que** l'appareil est doté d'un châssis ayant deux barres allongées qui sont horizontales lorsque l'appareil est en service et qui sont fixées l'une à l'autre par des entretoises.
